Europäisches Patentamt

European Patent Office

Office européen des brevets

Publication number: **0 262 361**
**A1**

# EUROPEAN PATENT APPLICATION

Application number 87111805.5

Int Cl⁴ **A47J 31/40**

Date of filing **14.08.87**

Priority. 27.09.86 GB 8623284

Date of publication of application:
06.04.88 Bulletin 88/14

Designated Contracting States:
AT BE CH DE ES FR GB GR IT LI LU NL SE

Applicant. Premier Brands U.K. Limited
Franklin House
Bournville Birmingham B30 2NA(GB)

Inventor: Bowling, Robert George
17 Arden Road Dorridge
Solihull West Midlands(GB)

Representative: Denmark, James
c/o Bailey Walsh & Co. 5 York Place
Leeds LS1 2SD Yorkshire(GB)

Improvements relating to dispensers for fluent products.

A beverage dispensing machine for beverages comprising a concentrate and a diluent is provided. The machine contains a bulk supply of the concentrate and to dispense a drink, a predetermined quantity such as a cupful of diluent, usually hot water, is poured into the machine. As the diluent passes through the machine, it actuates a concentrate metering mechanism which mixes a metered quantity of concentrate with the predetermined quantity of diluent and the mixture issues as a beverage.

*FIG.2*

EP 0 262 361 A1

## Improvements Relating to Dispensers for Fluent Products

This invention relates to the dispensing of fluent products, such as beverages, food products such as mashed potato, soup or other products which are not food in nature such As plaster or mortar, which are made up of a diluent typically water, and what is described herein as a concentrate which more usually will be in granular or powder form, but could in some instances be in concentrated liquid or paste form A main application of the invention is in connection with the dispensing of beverage and in such a case the diluent will usually be water and will normally be hot water, but again it is not essential to the invention that the water should be hot. In the interests of simplicity, reference is made hereinafter only to beverage, but it is intended that the invention can be applied to the range of materials indicated.

There are known dispensers for the dispensing of hot drinks and/or cold drinks, such dispenser containing a bulk supply of concentrate to be mixed with hot or cold water, and a bulk supply of water. Operation of the device is by the depression of an actuating button and/or insertion of a coin , when a cup or other receptacle is placed under an outlet. The machine operates to mix a quantity of water with a quantity of the concentrate and the mixture is dispensed into the cup.

Typical of the abovementioned known machines are disclosed in United States Patents 3,084,047, 2,614,738, 4,488,664, 3,171,344 and 2,569,486, and also in German Patent Specification 3,342,157 and 915,363.

A major difficulty with machines of this type is in fact one of maintenance, and in fact one of maintenance of the water side of the equipment, especially where the water is heated, because in order to provide a heated bulk supply of water from the machine, a water boiler is required which is usually electrically heated, and also required are sensing devices for controlling the level and temperature of water in the boiler, water valves and associated circuitry and supply lines to ensure that the water will be supplied in correct proportion to the concentrate, upon demand. The water circuit has a tendency to scale up if the water contains a high calcium content, as the resulting scale tends to settle on the sensing devices, the control valves and heating elements. Breakdowns are therefore frequent because of the scale build-up. Additionally, various control devices are provided for the water side of the equipment regardless of whether or not the water is heated, and these control devices can and are often liable to failure.

Slightly less complicated dispensing machines are disclosed in United States Patent 3,955,713 (Hurley), United States Patent 2,569,820 (Locke) and Swiss Patent 427,174

In the Hurley patent, a dispensing device is disclosed which is usable in motor cars, and provides that a tank is filled with water to provide a bulk supply A valve from the tank leads to a sub-chamber and the valve is operable by the driver to allow water to run from the tank into the sub-chamber. The sub-chamber is provided with a heater to heat the water therein, and an outlet which again is valve controlled by the driver. When the driver wishes to dispense a quantity of hot water from the sub-chamber he operates the outlet valve thereof, and the hot water runs along a chute and eventually into a drinking cup. Other sub-chambers are provided for concentrates so that the driver can release a quantity of concentrate into the trough before releasing hot water into the trough in order to provide the mixed beverage in the cup. This device still has the complications of manually controlled valves which require to be operated in a sequence to be decided by the driver, and furthermore the sub-chamber requires a heating element which is subject to the disadvantages mentioned above.

Again in the Locke patent, which discloses a hot beverage maker, the apparatus includes a boiler into which water is charged when it is required to make a cup of coffee. The user in fact pours a quantity of water into a header tank and the water runs from the header tank into the boiler. When the water arrives in the boiler an electric heating element is automatically switched on in order to heat the water which turns the water to steam and drives it out of an outlet pipe into a mixing chamber where it mixes with a quantity of coffee previously positioned therein by manual operation of the device on the part of the operator. When it is desired to dispense the cup of coffee an outlet valve has to be opened by the operator and a cup located under the outlet to catch the beverage. Although this machine is somewhat simpler than the coin operated and vending machines, nevertheless it still requires the water to be heated and for the water to stand in the boiler whilst heating takes place and these features it is considered by the inventor in the present application are undesirable.

The Swiss specification discloses an essentially simple dispensing device in which water at mains pressure is supplied to a heat exchange coil so that the water will be driven through the heat exchange coil in an upwardly spiral in fashion until it reaches a discharge pipe which extends downwardly and has an outlet nozzle so that the water will issue therefrom after being duly heated. with sufficient velocity to open a flat valve which controls the dispensing of the concentrate When the flat valve is opened as a result of the jet of water impinging thereon. the water and concentrate fall into a collecting vessel in which they mix. and the vessel acts as a sieve so that the liquid component drains through same leaving solid matter behind. and the liquid is again filtered by a filter paper before being discharged from an outlet directly into a drinking cup It is necessary in this device that water under pressure be supplied in order that the water will be driven around the heat exchange coil and will be raised in its travel through the heat exchange coil This means that when the device is not operational. the heat exchange coil will have standing water therein which is undesirable insofar as the water may become stagnent and·or contaminated if the device is not used for a long period of time. Again the device includes a heating means for heating the water as it travels through the heat exchange coil and heating devices embodied in machines do have their associated problems as outlined above.

The present invention. at least in its preferred form, seeks to provide a machine operating on a novel principle and as one in which the disadvantages associated with this known machines are overcome. The preferred form of the machine of the invention is one for dispensing hot chocolate which requires the dispensing and mechanical mixing of the ingredients so that the dispensed drink will be frothy in nature, as the invention is particularly suitable for dispensing this type of beverage.

The majority of dispensing machines in fact operate on a principle of providing a bulk supply of the concentrate and a bulk supply of the diluent, the diluent and concentrate flowing simultaneously when the dispenser is operated to provide two constituents which mix to form the beverage. This means that apart from the machine of Swiss Patent No. 427,174 there has to be of necessity control valves for controlling both the concentrate and diluent, but the present invention in seeking to solve a specific problem in relation to hot chocolate dispensing machines, has in fact provided a much wider concept and applies to all beverage dispensing involving the dispensing of a diluent and a concentrate.

In accordance with the present invention, there is provided a machine for the dispensing of a beverage comprising means providing bulk supply of a concentrate to be mixed with a diluent, means controlling the supply of the concentrate to an outlet, and a diluent supply path leading through the machine such that the concentrate flowing from the bulk supply to said outlet is mixed with diluent flowing along said path so that the machine issues a mixed beverage. characterised in that the said diluent supply path has an inlet into which the quantity of diluent to form a predetermined quantity of beverage is poured directly from a separate vessel tap or the like. and said path has no valve or other means of arresting the flow of diluent along said path so that the diluent when poured into the machine passes directly along said path. mixing with the concentrate as it does and issuing as part of a beverage

According to another aspect of the machine. the act of pouring the diluent into the machine gives rise to the operation of the dispensing of the concentrate. and this aspect forms an independent feature of novelty of the present invention.

The pouring in of the diluent into the machine may cause actuation of the dispensing of the concentrate by virtue of the diluent being poured into a tank. chamber or the like containing a float which in turn operates a microswitch in that the float is lifted by the build-up of diluent in a tank (the diluent tending to run from the tank and out of said outlet whilst the diluent level is building up in the tank) such that when the float is raised. the means effecting dispensing of the concentrate is operated, and when the float again falls to a predetermined position. the microswitch is again operated by the float to terminate the dispensing of the concentrate.

In an alternative system. the float arrangement may be substituted by a water-level sensing device such as level sensing probes which actuate the dispensing of the concentrate through a suitable electronic control board when water is added to the machine.

There is preferably an outlet from the tank in the form of an outlet pipe which leads to a chamber into which the concentrate is dispensed and from the chamber is an outlet pipe leading to the outlet from the machine.

With this arrangement, when the diluent is first poured into the diluent tank, some of the diluent flows out of the diluent pipe to said chamber before the level of the diluent starts to build up in the tank and therefore in the initial dispensing of the beverage diluent only flows from the outlet. When the float is lifted and the concentrate dispensing means is actuated, concentrate is dispensed into the chamber along with the diluent, in which chamber the diluent and concentrate are mixed, and when the level of diluent in the tank starts to fall when a predetermined quantity of diluent has been charged into the machine, the float eventually contacts the microswitch ceasing further discharge of the concentrate, and a residual amount of diluent in the diluent pipe then flows into the chamber and out of the machine outlet, effecting a cleaning action on these parts of the machine of residual concentrate. This is how in fact the existing hot chocolate dispensing machines operate in that there is an initial dispensing of water only. followed by the dispensing of the bulk of the beverage comprising a mixture of chocolate and water. followed finally by a portion of water only to remove residual chocolate deposits in the mixing chamber and outlet tube

In the mixing chamber there may be a mechanical blending or mixing device which operates mechanically on the mixture of diluent and concentrate to provide a whipped mixture Such a blend is required in the dispensing of drinks such as hot chocolate which require to be whipped or creamy in texture.

The concentrate dispensing side of the machine may be conventional in nature. For example the concentrate may be powder or granular material contained in a hopper at the base of which is an augur feeder driven by an electric motor. The electric motor and augur are driven when the machine is operated, which may be by depression of a button manually, or preferably is by automatic sensing of the presence of diluent in the diluent tank as explained herein.

In yet a further arrangement, the hopper is defined by a container which is normally used for the packing and transportation of the concentrate. A container may simply be placed in the machine or form an integral part of the hopper, for example in inverted condition so as to overlie the augur whereby the contents will simply gravitate onto the augur as they are used up in the dispensing of beverages.

A considerable advantage of the preferred embodiment of the present invention is that the machine is of much less cost than the known hot chocolate dispensing machine insofar as there is no requirement to provide a hot water boiler, or any water level sensing devices or temperature-control devices or water flow control valves and it is simply a matter of providing a water passage through the machine, which passage embodies a tank for holding the water whilst it gradually feeds out through the machine to produce the beverage. It will be understood that subsequent maintenance of such a machine will be much less than the conventional and more complicated machine embodying a water boiler and water valve.

In the preferred form of the machine, the user simply charges diluent, typically hot water, directly into the water path. This should not cause any inconvenience, because in virtually all establishments which use these machines, there will be on hand a plentiful supply of hot water.

In the use of the preferred form of the machine. the user simply takes a predetermined quantity of hot water. for example a cup full or a jug full depending upon the quantity of beverage to be produced. and places a similar sized cup or jug under the outlet. and pours the hot water directly into the water path of the machine. The machine in the preferred case operates automatically upon sensing the presence of the water as described above actuating the concentrate dispensing side of the machine and the resulting beverage pours directly from the outlet. the water in no way having been blocked in its flow, but its rate of flow having been controlled by appropriate dimensioning of the water tank and in particular the water outlet pipe from the tank, which will be matched to the pre-set flow of concentrate. Means will of course be provided for varying the respective rates of concentrate and diluent in order to achieve the most palatable beverage.

Although reference has been made herein specifically to beverages. and as the invention will apply most widely to the dispensing of beverages, it will be understood that the invention can be applied in any case where one ingredient is to be mixed with a liquid component to provide a mixture to be dispensed from an outlet.

In some arrangements. the water from the water pipe and the concentrate lead into a blender chamber, and from the blender chamber the mixed components pass to an agitator chamber in which the agitating device is contained. The outlet pipe leads from said agitating chamber.

An embodiment of the invention will now be described, by way of example, with reference to the accompanying diagrammatic drawings, wherein:-

Fig. 1 is a plan view of an apparatus according to an embodiment of the invention;

Fig. 2 is a front view of the apparatus of Fig. 1; and

Fig. 3 is a sectional side view of the apparatus shown in Fig. 1.

Referring to the drawings, the machine as shown comprises an upright casing 10 in which is contained a concentrate hopper A for, in this case, containing a concentrate powder such as hot chocolate. In the base of the hopper A is an augur B which is adapted to be rotated about its axis by means of a drive connection C being in the form of an augur drive motor. When the augur B is driven, dry concentrate powder is metered by the augur and ejected from an outlet 12 at the end thereof remote from motor C and into a blending chamber D. In the blending chamber D the powdered chocolate is mixed with water supplied from a water tank J through pipe or passage 14 containing a restrictor K. The mixture of water and chocolate then passes to a blending chamber E containing a drivable impeller F When this impeller is driven, the mixture of chocolate and water in the chamber E is whipped or creamed and the resulting mixture issues as whipped hot chocolate from a product nozzle or outlet tube 15 having an outlet (H) and is caught in the cup 16 as shown

The impeller F is driven by a shaft connected from the impeller F to an impeller or whipper motor G

The operation of the machine as described above is essentially conventional, but the present invention at least in this embodiment relates to the manner in which the water is supplied to and fed through the machine

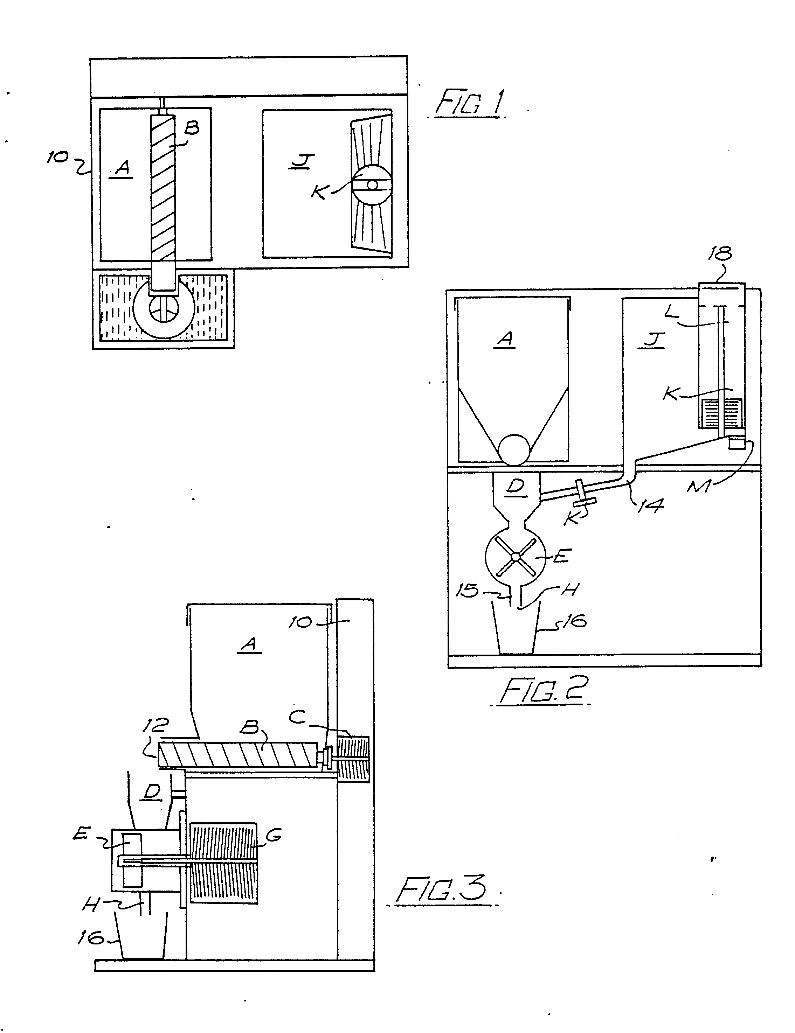

As can be seen from Fig. 2, the water tank J is simply an open top 18 tank and it contains a float K1 arranged to act upon a microswitch H such that when the float K rises from a predetermined position it will operate the microswitch M which in turn causes actuation of the motors C and G to cause dispensing of the concentrate powder and rotation of the impeller to whip the mixture of water and concentrate.

Quite simply, the water to form a beverage is pre-measured and then simply is charged into the tank J from whence it flows directly through the tank outlet pipe containing restrictor K to the blending chamber D. The rate of outflow into the chamber D will not be as great as the rate of inflow into the tank J (which is of sufficient quantity to contain enough water to make up the required volume of beverage) so that the level of water will in fact build up in the tank J. As soon as the level starts to build up, the float K is lifted to actuate the microswitch M which in turn operates the augur B, motor C and hence feeding a metered quantity of the powdered material into the blending chamber D and motor G causing whipping of the mixture as it passes through the whipping chamber E. When all of the water has been charged into the tank J, with the continued flow of water into the blending chamber D, the level will start to fall, and when the predetermined level is again reached, the float K1 will cease contacting the microswitch M and the motors C and G will be switched off terminating delivery of the concentrate and whipping of the mixture. After the termination of the operation of the motors C and G, a residual amount of water in the water pipe containing restrictor K will flow into the blending chamber through the whipping chamber and out of the outlet H effecting a cleaning action on these parts and completing dispensing of the beverage. Also, it will be noticed that during the initial flow of water, a portion will flow through the blending chamber D through the whipping chamber F and out of the outlet H before the dispensing of the concentrate commences and this is desirable in dispensing this type of beverage.

The novelty of the embodiment of the invention described is that as far as the water side is concerned the operation is "kinetic" in that water flows continuously in that there are no valves or blockage means which can prevent the flow of water The restrictor K can control the rate of flow to the blending chamber D, and it may in fact be provided for blocking flow but this is not a required feature of the operation. Also, the restrictor K is set as will be the rate of turning of the augur B to ensure that the correct proportions of concentrate and diluent are mixed to form the final beverage. The rates of flows of concentrate and diluent can of course be adjusted to suit requirements.

The hopper A can in fact be defined by the container or canister in which the powdered product is sold, the container or canister being adapted to be fitted to an adaptor so that, in an inverted condition if necessary, the product can flow directly from the container or canister onto the augur B.

In use, the motors C and G although of an adjustable speed will be set to operate at a fixed speed so that a fixed rate of delivery of concentrate will take place.

Instead of using two motors C and G, a single motor with a gear drive may be used for driving both the augur and the impeller.

The float K1 is preferably arranged to slide upon fixed rod L to ensure that it will come into contact with the microswitch when it is raised.

The restrictor K may be a manually adjustable device so that it can be set to give the required ratio of water to concentrate. A particular advantage of the embodiment of the invention described is that it is possible to dispense any quantity of beverage up to the volume of the tank J without adjusting the equipment consequent upon the amount of beverage to be dispensed which compares favourably with existing machines which have to be adjusted when it is desired to adjust the machine from a setting in which a cupful is dispensed to a setting in which say a jugful is dispensed. Indeed any volume of beverage can be dispensed, the user simply pouring the diluent into the tank J as required. Dispensing will continue as long as the tank contains diluent and the diluent can be poured into the tank continuously or intermittently, without any adjustent to the machine.

## Claims

1. A machine for dispensing a beverage comprising means (A) providing a bulk supply of a concentrate to be mixed with a diluent, dispensing means (BC) controlling the supply of the concentrate to an outlet (H) and a diluent supply path (J.14) leading through the machine such that concentrate flowing from the bulk supply (A) to said outlet (H) is mixed with diluent flowing along said path (J.14) so that the machine issues a mixed beverage, characterised in that the said diluent supply path has an inlet (18) into which the quantity of diluent to form a predetermined quantity of beverage is poured directly from a separate vessel, tap or the like, said path (J,14) being such as to permit the diluent when poured into the machine to pass directly along said path (J,14) mixing with the concentrate as it does, and issuing as part of the mixed beverage.

2. A machine according to Claim 1, characterised by means (K1.M) responsive to the pouring of diluent into the machine to cause actuation of the means (B,C) controlling the supply of concentrate to the outlet (H).

3. A machine according to Claim 2, wherein said flow path (J,14) includes a tank (J) for receiving diluent poured into the machine characterised in that said means (K1,M) responsive comprises a float (K1) adapted to operate a micro-switch (M) when the float (K1) is lifted by the rising diluent level when the diluent is poured into said tank (J) said flow path (J,14) also including an outlet passage (14) leading to said outlet (H) and through which the diluent flows immediately the diluent is poured into the tank (J) so that when the float (K1) falls with continued flow of diluent along said passage and out of the machine, the microswitch (M) is again operated to terminate dispensing of the concentrate.

4. A machine according to Claim 2, wherein said flow path (J,14) includes a tank (J) for receiving diluent poured into the machine characterised in that said means (K1,M) responsive comprises sensing probe means adapted to operate a sensing device when the float (K1) is lifted by the rising diluent level when the diluent is poured into said tank (J) said flow path (J,14) also including an outlet passage (14) leading to said outlet (H) and through which the diluent flows immediately the diluent is poured into the tank (J) so that when the level falls with continued flow of diluent along said passage and out of the machine, sensing means is again operated to terminate dispensing of the concentrate.

5. A machine according to Claim 3 or 4, characterised in that said passage (14) leads to a chamber (E) into which the concentrate is dispensed, said chamber having an outlet pipe (15) leading to the outlet (H)

6 A machine according to claim 5, characterised by a mechanical blending or mixing device (F) to provide a whipped mixture of concentrate and diluent

7 A machine according to claim 5, characterised in that said blending or mixing device (F) comprises a rotary blender (F) drivingly connected to a blender motor (G).

8 A machine according to any one of the preceding claims characterised in that the means (B.C) comprise an auger feeder (B) driven by a motor (C).

9. A machine according to any one of the preceding claims characterised in that the hopper (A) is defined by a container which is used for the packing and transportation of the concentrate, the container being located in inverted condition in the machine and connected so that the contents gravitate towards said means (B,C).

10. A beverage dispensing machine for the dispensing of beverges comprising a mixture of concentrate and diluent, comprising a bulk supply (A) of concentrate, a mixing chamber (E) in which the concentrate and diluent are mixed, an outlet (15H) leading from the mixing chamber and from which the mixed beverage issues, means (B,C) controlling the supply of concentrate to said mixing chamber (E), characterised in that the machine is constructed so that the diluent is poured into the machine in predetermined amounts, and said diluent passes directly to the outlet (H) when so poured into the machine, but there is also means sensitive to the pouring into the machine of the diluent to cause concentrate to be dispensed into said mixing chamber (E) to be mixed with the diluent to provide the beverage at said outlet (H).

11. A machine for dispensing a beverage comprising means (A) providing a bulk supply of a concentrate to be mixed with a diluent, dispensing means (B,C) controlling the supply of the concentrate to an outlet (H), mechanical mixing means (E) for mixing the diluent and concentrate, drive means (G) for driving the mixing means (E) and a diluent supply path (J,14) leading through the machine such that the concentrate flowing from the bulk supply (A) to said outlet (H) is mixed with diluent flowing along said path (J,14) in a mixing chamber (F) containing the mixing means (E) so that the machine issues a mixed beverage, characterised in that the said diluent supply path has an inlet (18) with an open top or an openable top into which the quantity of diluent to form a predetermined quantity of beverage is poured directly from

**0 262 361**

a separate vessel, tap or the like, said path (J.14) including said mixing chamber and being such as to permit the diluent when poured into the machine to pass directly along said path (J.14) mixing with the concentrate as it does, and issuing as part of the mixed beverage, and including means (M.K.L) to automatically start and stop the drive means and the dispensing means as a result of the passage of the diluent through the machine

FIG 1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-3 955 713 (HURLEY)<br>* Whole document * | 1,5 | A 47 J 31/40 |
| D,X | US-A-2 569 820 (LOCKE)<br>* Column 5, lines 51-73; figure 2 * | 1,5 | |
| D,X | CH-A- 427 174 (THEODORAKOPOULOS)<br>* Whole document * | 1,2,5,<br>10 | |
| D,A | US-A-3 084 047 (HOLSTEIN et al.)<br>* Column 3, lines 28-57; figure 1 * | 1-5,10 | |
| D,A | DE-A-3 342 157 (ZINTRON AG)<br>* Whole document * | 1,5-10 | |
| D,A | GB-A- 915 363 (GLOSTER EQUIPMENT LTD)<br>* Page 2, line 107 - page 3, line 87;<br>figures 1-3 * | 1-5,9,<br>10 | |
| D,A | US-A-2 614 738 (MILLS)<br>* Figures 9,14-16; columns 7,8 * | 1-3,5 | TECHNICAL FIELDS SEARCHED (Int. Cl.4) |
| D,A | US-A-4 488 664 (CLELAND) | | A 47 J |
| D,A | US-A-3 171 344 (MATHIEU et al.) | | |
| D,A | US-A-2 569 486 (MILLS) | | |

The present search report has been drawn up for all claims

| Place of search | Date of completion of the search | Examiner |
|---|---|---|
| THE HAGUE | 23-12-1987 | SCHARTZ J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)

BAD ORIGINAL